(19) Europäisches Patentamt
European Patent Office
Office européen des brevets

(11) EP 4 310 767 A1

(12) EUROPEAN PATENT APPLICATION
published in accordance with Art. 153(4) EPC

(43) Date of publication:
**24.01.2024 Bulletin 2024/04**

(21) Application number: **21931834.2**

(22) Date of filing: **09.12.2021**

(51) International Patent Classification (IPC):
***G06Q 50/30** (2012.01)* ***G06Q 10/02** (2012.01)*
***G06Q 30/06** (2023.01)*

(52) Cooperative Patent Classification (CPC):
**G06Q 10/02; G06Q 30/02; G06Q 30/06; G06Q 30/0631; G06Q 50/10; G06Q 50/30**

(86) International application number:
**PCT/KR2021/018523**

(87) International publication number:
**WO 2022/196893 (22.09.2022 Gazette 2022/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.03.2021 KR 20210035677**

(71) Applicants:
- **Allwinair Co., Ltd.
Seoul 04387 (KR)**
- **Lee, Jeong-Gab
Seoul 06288 (KR)**

(72) Inventor: **LEE, Jeong-Gab
Seoul 06288 (KR)**

(74) Representative: **Beyer, Andreas
Wuesthoff & Wuesthoff
Patentanwälte PartG mbB
Schweigerstrasse 2
81541 München (DE)**

# (54) SEAT RECOMMENDATION METHOD AND DEVICE

(57) Provided are a seat recommendation method and apparatus for recommending a group seat of a plurality of people on the basis of name record (NR) information of a representative. The seat recommendation method and apparatus may determine a group type on the basis of NR information and recommend a group seat suitable for a group type.

FIG. 3

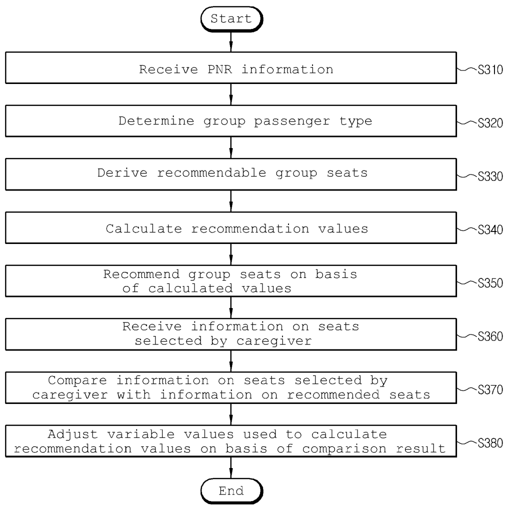


EP 4 310 767 A1

## Description

CROSS-REFERENCE TO RELATED APPLICATIONS

This application is a National Phase Application of PCT International Application No. PCT/KR2021/018523, which was filed on December 9, 2021, and which claims priority from Korean Patent Application No. 10-2021-0035677 filed on March 19, 2021. The disclosures of the above patent applications are incorporated herein by reference in their entirety.

Technical Field

The present invention relates to a seat recommendation method and apparatus, and more particularly, to a seat recommendation method and apparatus for recommending a group seat for a plurality of people on the basis of name record (NR) information of a representative.

Background Art

Currently, many people can purchase tickets to the real world, such as airplanes, theaters, concert halls, sports venues, and trains with reserved seats, and virtual worlds such as the metaverse, through the Internet. In this case, seat assignment must be made at the same time as or after ticket purchase. In addition, seat assignment may vary in price depending on the location.

For example, seat classes of current airlines are divided into four classes: first, business/prestige, premium economy, and economy, and airlines are operating an aircraft seat arrangement system in a combination of two or three classes or a single economy class (especially in the case of low-cost airlines) in accordance with routes and operating aircraft situations.

With the recent emergence of low-cost airline business models in the market, users have been able to travel by air at low cost, but they have recognized that it is inconvenient to fly for several hours. Accordingly, there is a growing demand for more comfortable seats even though users need to pay for seat reservation in advance.

People can purchase or reserve desired seats on an airplane through the Internet after tickets are issued. The current seat reservation system simply displays non-selected seats and selected seats to a user in a distinguishing manner and allows the user to purchase or designate a currently unselected seat. In the seat reservation system as described above, when a user has a co-passenger, the user has to purchase or designate seats in consideration of the seat of the co-passenger, which is inconvenient. In particular, there are many cases in which passengers have to endure inconvenience because they cannot sit close to each other and are likely to sit apart depending on a seat assignment situation.

Therefore, it is necessary to provide technology for automatically recommending a preferred seat in consideration of the sex and age of a user, the number of passengers, and the like.

Disclosure

Technical Problem

An object of the present invention is to provide a seat recommendation method and apparatus for recommending a group seat for a plurality of people on the basis of representative NR information.

An object of the present invention is to provide a seat recommendation method and apparatus capable of determining a group type on the basis of NR information and recommending a group seat suitable for the group type.

An object of the present invention is to provide a seat recommendation method and apparatus for recommending a group seat by deriving all currently recommendable group seats depending on a group type and calculating recommendation values for the derived group seats.

An object of the present invention is to provide a seat recommendation method and apparatus for adjusting variable values used to calculate recommendation values through analysis of information on group seats recommended on the basis of recommendation values and information on a group seat selected or not selected by a representative.

Technical Solution

In accordance with the present invention, the above and other objects can be accomplished by the provision of a seat recommendation method of a seat recommendation apparatus connected to a computer network, the seat recommendation method including determining a group type on the basis of name record (NR) information of a representative, the NR information including information on the representative and companions, deriving all currently recommendable group seats using group seat pattern information and seat information, calculating a recommendation value corresponding to the group type for each of the derived group seats, and recommending a predetermined number of group seats to the representative on the basis of calculated result values.

In accordance with another aspect of the present invention, there is provided a seat recommendation apparatus connected to a computer network, including a group type determination unit configured to determine a group type on the basis of name record (NR) information of a representative, the NR information including information on the representative and companions, a group pattern database in which group seat pattern information is stored, a recommendable seat derivation unit configured to derive all currently recommendable group seats using the group seat pattern information and seat information, a recommendation value calculation unit configured to calculate a recommendation value for each of the derived group seats, a group seat recommendation unit configured to recommend a predetermined number of group seats on the basis of calculated result values, and a control unit configured to control a reception unit, the group type determination unit, the group pattern database, an air seat database, the recommendable seat derivation unit, the recommendation value calculation unit, and the group seat recommendation unit.

In accordance with a further aspect of the present invention, there is provided a seat recommendation method of a seat recommendation apparatus connected to a computer network, the seat recommendation method including deriving all currently recommendable group seats corresponding to a group type based on NR information of a representative, the NR information including information on the representative and companions, calculating a recommendation value for each of the derived group seats using a position value and a pattern value for each of the derived group seats, recommending a predetermined number of group seats on the basis of calculated result values, receiving information on a group seat selected by the representative, comparing the information on the group seat selected by the representative with information on the recommended group seats, and adjusting at least one of the position value and the pattern value on the basis of comparison results.

In accordance with a further aspect of the present invention, there is provided a seat recommendation apparatus connected to a computer network, including a recommendable seat derivation unit configured to derive all currently recommendable group seats corresponding to a group type based on NR information of a representative, the NR information including information on the representative and companions, a recommendation value calculation unit configured to calculate a recommendation value for each of the derived group seats using a position value and a pattern value for each of the derived group seats, a group seat recommendation unit configured to recommend a predetermined number of group seats on the basis of calculated result values, a reception unit configured to receive information on a group seat selected by the representative, a gap analysis unit configured to compare the information on the group seat selected by the representative with information on the recommended group seats and to adjust at least one of the position value and the pattern value on the basis of comparison results, and a control unit configured to control the recommendable seat derivation unit, the recommendation value calculation unit, the reception unit, and the gap analysis unit.

## Advantageous Effects

A seat recommendation method and apparatus according to an embodiment of the present invention can determine a group passenger type on the basis of NR information of a representative and recommend a group seat suitable for the passenger type.

According to an embodiment of the present invention, it is possible to promote the convenience of seat selection of customers by deriving all currently recommendable group seats according to a group type, calculating recommendation values for the derived group seats, and recommending group seats.

According to an embodiment of the present invention, it is possible to recommend group seats in which customers' needs have been reflected by adjusting variable values used to calculate recommendation values through analysis of information on group seats recommended on the basis of recommendation values and information on a group seat selected by a representative.

## Description of Drawings

FIG. 1 is a block diagram showing a seat recommendation system related to an embodiment of the present invention.

FIG. 2 is a block diagram of a seat recommendation apparatus shown in FIG. 1.

FIG. 3 is a flowchart showing a seat recommendation method related to an embodiment of the present invention.

FIG. 4 is a diagram for describing group passenger types related to an embodiment of the present invention.

FIG. 5 is a diagram for describing an example of determining a passenger type on the basis of PNR information related to an embodiment of the present invention.

FIG. 6 is a diagram for describing a method of determining recommendation ranking by calculating recommendation values related to an embodiment of the present invention.

FIG. 7 is a diagram for describing a process in which a caregiver selects a group seat in calculating recommendation values for group seats related to an embodiment of the present invention.

FIG. 8 and FIG. 9 are diagrams comparing recommendation values according to a group seat recommendation model with actual seat assignment and purchase data related to an embodiment of the present invention.

FIG. 10 is a diagram for describing a method of determining recommendation ranking by calculating recommendation values for seats in a performance hall such as a theater related to an embodiment of the present invention.

FIG. 11 shows group seat patterns related to an embodiment of the present invention.

FIG. 12 is a diagram for describing a process in which a caregiver selects a group seat from seats in a performance hall such as a theater related to an embodiment of the present invention.

FIG. 13 is a diagram for describing a process in which a caregiver selects a group seat from sports stadium seats related to an embodiment of the present invention.

Description of Reference Numerals

100: User terminal
200: Seat recommendation apparatus
210: Reception unit
215: Passenger type determination unit
220: Group pattern database
225: Recommendable seat derivation unit
230: Air seat database
235: Recommendation value calculation unit
240: Group seat recommendation unit
245: Seat designation unit
250: Gap analysis unit
260: Control unit
300: Travel agency server
350: Airline server

Best Mode

Hereinafter, a seat recommendation method and apparatus related to an embodiment of the present invention will be described with reference to the drawings.

The singular expression includes the plural expression unless the context clearly dictates otherwise. In this specification, terms such as "comprise" or "include" should not be construed as necessarily including all of various components or steps described in this specification and should be construed as not including some of the components or some of the steps or further including additional components or steps.

A seat recommendation method and apparatus related to an embodiment of the present invention can be applied to seat recommendation for performance halls such as theaters, airplanes, sports halls, and trains for which seats need to be assigned.

In addition, the seat recommendation method and apparatus related to an embodiment of the present invention can be applied not only to seat recommendation in the real world but also to seat recommendation in virtual worlds, such as a metaverse where each seat has a different position and needs to be assigned.

In this specification, a representative is a representative of a group, and may include a representative who reserves tickets for performance halls such as a theater, an airplane, a sports stadium, and a train, a representative participant in a virtual world, or the like.

In this specification, name record (NR) information of a representative may include information on the representative and companions in the case of ticket reservation or participation in a specific game. For example, NR information may include a passenger name record (PNR) of an airline ticket.

In this specification, a companion is a member who forms a group with a representative in recommendation of a group seat, and may include co-passengers, co-spectators, co-participants, and the like.

In this specification, a group type may mean a group type determined on the basis of NR information. The group type may include a group passenger type, a group participant type, and a group spectator type.

Although airplane seat recommendation will be described as an example of seat recommendation according to the present invention in the following embodiments, the present invention is not limited thereto.

FIG. 1 is a block diagram showing an airplane seat recommendation system related to an embodiment of the present invention.

As shown, the airplane seat recommendation system may include a user terminal 100, a seat recommendation apparatus 200, a travel agency server 300, and an airline server 350. Here, a user may include a caregiver who makes a reservation in a passenger name record (PNR).

Hereinafter, an example in which the seat recommendation apparatus 200 recommends seats by being connected to the travel agency server 300 or the airline server 350 will be described, but the seat recommendation apparatus 200 may recommend seats without being connected to the travel agency server 300 or the airline server 350 if the seat recommendation apparatus 200 is a subject supplying seats.

The user terminal 100, the seat recommendation apparatus 200, the travel agency server 300, and the airline server 350 may be connected to a computer network.

The user may directly access an airplane pre-purchase or assignment page through the user terminal 100 or access an airplane seat purchase or assignment page through the travel agency server 300 or the airline server 350.

Further, when a ticket is purchased through a travel agency or an airline, the seat recommendation apparatus 200 may receive ticket reservation information from the travel agency server 300 or the airline server 350. An example of airline ticket reservation information is a passenger name record (PNR). PNR information is information on airline ticket reservation and may include a passenger's name, a co-passenger's name, passenger's passport information, departure information, return information, and the like.

Hereinafter, a PNR will be described as an example of airline ticket reservation information.

The seat recommendation apparatus 200 may determine a group passenger type on the basis of PNR information and derive all group seats which correspond to the determined passenger type and are currently available. The seat recommendation apparatus 200 may determine ranking by calculating a recommendation value for each group seat that can be derived. In addition, the seat recommendation apparatus 200 may recommend a predetermined number of group seats to the caregiver according to the ranking result.

FIG. 2 is a block diagram of the seat recommendation apparatus shown in FIG. 1.

As shown, the seat recommendation apparatus 200 may include a reception unit 210, a passenger type determination unit 215, a group pattern database (DB) 220, a recommendable seat derivation unit 225, an air seat database (DB) 230, a recommendation value calculation unit 235, a group seat recommendation unit 240, a seat assignment unit 245, a gap analysis unit 250, and a control unit 260.

The seat recommendation apparatus 200 may be hardware such as a microprocessor or an electronic circuit or software such as a program or firmware executed by the hardware, and also may be implemented by combining the hardware and the software.

The reception unit 210 may receive a PNR of a user (e.g., caregiver) from the travel agency server 300 or the airline server 350. A passenger's name, co-passenger's name, passenger's passport information, departure information, return information, and the like may be confirmed through the PNR. Further, the reception unit 210 may receive statistical purchase data for each seat.

Meanwhile, the PNR information may be received or may be generated by the seat recommendation apparatus 200.

The reception unit 210 may receive information on a group seat selected by a caregiver.

The passenger type determination unit 215 may determine a group passenger type on the basis of the PNR information. The passenger type determination unit 215 is an example of a group type determination unit that determines a group type.

Group seat pattern information is stored in the group pattern DB 220. The group seat pattern information may include shape information of group seats. A group seat may have a square shape, an L shape, an I shape, or the like.

In addition, seat information may be stored in the air seat DB 230. The seat information may include information on a seat map of all seats in an airplane and information on currently occupied seats.

The recommendable seat derivation unit 225 may derive all currently recommendable group seats using the group seat pattern information and the seat information.

The recommendation value calculation unit 235 may calculate a recommendation value for each of all the derived group seats. The recommendation value may be calculated using a position value and a pattern value of each seat included in a group seat. A method of calculating a recommendation value will be described later.

The group seat recommendation unit 240 may recommend a predetermined number of group seats to the caregiver on the basis of calculated recommendation values.

The seat assignment unit 245 may assign a group seat for the corresponding PNR on the basis of the information on the group seat selected by the caregiver.

The gap analysis unit 250 may compare information on the group seat selected by the caregiver with information on recommended group seats and adjust at least one of the position value and the pattern value on the basis of the comparison result.

The control unit 260 may generally control the reception unit 210, the passenger type determination unit 215, the group pattern DB 220, the recommendable seat derivation unit 225, the air seat DB 230, the recommendation value calculation unit 235, the group seat recommendation unit 240, the seat assignment unit 245, and the gap analysis unit 250.

FIG. 3 is a flowchart showing an airplane seat recommendation method according to an embodiment of the present invention.

The reception unit 210 may receive PNR information of a caregiver from the travel agency server 300 or the airline server 350 (S310).

The passenger type determination unit 215 may determine a group passenger type on the basis of the PNR information (S320).

FIG. 4 is a diagram for describing passenger types related to an embodiment of the present invention.

As shown, passenger types may be classified into a care type, a couple type, a community type, and the like. Although there are three passenger types in the illustrated example, there may be more or less passenger types.

A passenger type may correspond to one of a plurality of passenger types when predefined conditions are satisfied. For example, if the PNR of the caregiver includes physically weak, the passenger type may be classified as the care type. For example, passengers such as infants (2 years old or younger), children (5 years old or younger), seniors (65 years old or older), and the like may be classified as physically weak.

For example, if the PNR includes an even number of adults (2, 4, 6, or 8), the same number of males/females, and a male/female age difference of 10 years or less, the passenger type can be classified as the couple type.

That is, group passenger types may be classified into one or more group passenger types on the basis of criteria such as the number of people (number of passengers), sex, age, and the number of members. For example, group passenger types may be classified into a 1-person type to a 9-person type on the basis of the number of people. In addition, group passenger types may be classified into a plurality of group passenger types on the basis of sex, age, the number of members, and the like.

FIG. 5 is a diagram for describing an example of determining a passenger type on the basis of PNR information related to an embodiment of the present invention.

Group passenger types may be classified into one or more group passenger types on the basis of criteria such as the number of people (number of passengers), sex, age, the number of members, and the like.

For example, a care type may be determined based on age, and a couple type may be determined based on number/sex.

As shown, the caregiver may reserve tickets including co-passengers. When air ticket reservation is completed, a PNR 410 of the caregiver may be created. In addition, the passenger type determination unit 215 may determine the passenger type as the care type 420 since the PNR includes a child.

Further, one PNR may be mapped to a plurality of group passenger types. For example, the PNR shown in FIG. 5 may be mapped to the care type and a family type.

The recommendable seat derivation unit 225 may derive all currently recommendable group seats using group seat pattern information and seat information (S330). The group seat pattern information may include shape information of group seats. A group seat may have a square shape, an L shape, an I shape, or the like. The seat information may include information on a seat map of all seats in an airplane and information on currently occupied seats.

The recommendation value calculation unit 235 may calculate a recommendation value for each of all the derived group seats (S340). The recommendation value calculation unit 235 may calculate a recommendation value using a position value and a pattern value of each seat included in each derived group seat.

Variables that determine the position value include a variable D representing a value according to a distance to an exit in the vertical direction of the corresponding seat, a variable WMA representing a value according to whether the horizontal position of the seat is a window, an aisle, or a middle seat, and a variable LMR representing a value according to whether the horizontal position of the seat belongs to a right block, a middle block, or a left block.

Variables used to determine the pattern value include a variable S representing a value according to a space per seat, a variable US representing a value according to a degree of seat separation from other passengers, and the like.

In addition, in calculation of a recommendation value, a variable P representing a value according to a price per seat may be used.

The recommendation value may be calculated by Equation 1 below. Equation 1 below is an example of using variables at the time of calculating a recommendation value, but the present invention is not limited thereto.

Equation 1

$$V=[(D*WMA*LMR*S)*(B*US)]/P$$

Here, V is a recommendation value, D is a variable representing a value according to a distance to an exit in the vertical direction of the corresponding seat, WMA is a variable representing a value according to whether the horizontal position of the seat is a window, an aisle, or a middle seat, LMR is a variable representing a value according to whether the horizontal position of the seat belongs to a right block, a middle block, or a left block, S is a variable representing a value according to a space per seat, B is a variable representing a value according to a degree of bonding between co-passengers, US is a variable representing a value according to a degree of seat separation from other passengers, and P is a variable representing a value according to a price per seat.

Equation 1 above is an example of calculating a recommendation value V. Therefore, the recommendation value V may be calculated by using only some of the variables shown in Equation 1 instead of using all thereof or by modifying the variables. For example, the recommendation value V may be calculated using a formula representing that the recommendation value V is proportional to at least one of D, WMA, LMR, S, B, and US and inversely proportional to P.

Initial values of the variables may be determined on the basis of actual seat assignment and purchase data.

FIG. 6 is a diagram for describing a method of determining recommendation ranking by calculating recommendation values related to an embodiment of the present invention.

A pattern value can be calculated from the product of B and US. In this case, initial values of B may be assigned as consecutive seats in the same row in the horizontal direction = 1, seats having a corridor therebetween in the same row = 0.5, diagonal seats in front and back rows = 0.1, and front and back seats = 0.

Further, US may be calculated by Equation 2 below.

Equation 2

US = number of group seats/total number of seats of corresponding block (including seats of other passengers)

Here, a block refers to a group of contiguous and consecutive seats. For example, 2A, 2B, and 2C may constitute one block, and 2D, 2E, and 2F may constitute another block.

A position value can be calculated as a product of D, WMA, LMR, and S. Initial values of D may be assigned as the first row with the closest distance to an exit = 1, the second row = 0.75, and the like.

In addition, initial values of S may be assigned as a general seat = 1 and a wide seat such as 2D = 2.32.

In addition, an initial value of WMA may be set differently depending on whether a seat is a window seat, a middle seat, or an aisle seat.

Further, an initial value of the LMR may be assigned differently depending on whether the horizontal position of a seat belongs to the right block, the middle block, or the left block.

In addition, the value P may be assigned differently depending on a price per seat.

If the assigned variable values are inserted into Equation 1 above, a total recommendation value can be calculated. Further, recommendation ranking of group seats may be determined according to calculated recommendation values.

The group seat recommendation unit 240 may recommend a predetermined number of group seats to the caregiver on the basis of the calculated recommendation value (S350).

If the caregiver likes the recommended group seats, he/she may select a recommended group seat. If the caregiver does not like the recommended group seats, he/she may select another group seat instead of the recommended group seats.

The reception unit 210 may receive information on the group seat selected by the caregiver (S360).

The gap analysis unit 250 may compare the information on the group seat selected by the caregiver with information on the recommended group seats (S370) and adjust at least one of the position value and the pattern value on the basis of the comparison result (S380).

FIG. 7 is a diagram for describing a process in which a caregiver selects a group seat in calculating a recommendation value for a group seat related to an embodiment of the present invention.

The recommendation value calculation unit 235 may calculate a recommendation value for each of all currently recommended group seats which have been derived as indicated by reference numeral 710.

The group seat recommendation unit 240 may recommend a predetermined number of group seats to the caregiver on the basis of recommendation ranking as indicated by reference numeral 720. That is, the group seat recommendation unit 240 may display a screen 720 displaying the predetermined number of group seats. In this case, recommendation values, recommendation ranking, and the like may be displayed along with the predetermined number of recommended group seats. In addition, price information of the recommended group seats may be additionally displayed on the screen 720 displaying the predetermined number of group seats.

In this case, the caregiver may select one of the recommended group seats as indicated by reference numeral 730 if he/she likes the recommended group seats.

The gap analysis unit 250 may compare and analyze whether the predetermined number of group seats recommended match those selected by the caregiver as indicated by reference numeral 740.

The gap analysis unit 250 may update Equation 1 on the basis of the analysis result. More specifically, the gap analysis unit 250 may update at least one of the variables applied to Equation 1.

FIG. 8 and FIG. 9 are diagrams comparing recommendation values and actual seat assignment and purchase data according to a group seat recommendation model related to an embodiment of the present invention.

Alpha air seat initial model data is a value obtained by normalizing a recommendation value calculated by Equation 1 in a state in which initial values are assigned to the variables in Equation 1, and actual data is a value obtained by normalizing a purchase probability for each seat calculated from actual seat assignment and purchase data.

As can be ascertained from FIG. 9, the alpha air seat initial model data and actual data are very similar. However, there are slight gaps in some seats.

The gap analysis unit 250 may adjust the value assigned to at least one of D, WMA, LMR, S, B, and US such that a difference between the calculated recommendation value and a purchase probability based on actually result of purchasing a group seat of the plural representatives is reduced.

In addition, the initial values assigned to the variables D, WMA, LMR, S, B, US, and P used in Equation 1 may be applied differently according to a passenger type.

FIG. 10 is a diagram for describing a method of determining recommendation ranking by calculating recommendation values for seats in a performance hall such as a theater related to an embodiment of the present invention.

In FIG. 10, the same recommendation value calculation formula as in FIG. 6 may be applied similarly. However, a distance D here may mean the distance to a stage.

FIG. 11 shows group seat patterns related to an embodiment of the present invention.

As shown, there may be various group seat patterns depending on the total number of people in a group. Group patterns may be classified into an I type, an L type, and a square type.

FIG. 12 is a diagram for describing a process in which a caregiver selects a group seat from seats in a performance hall such as a theater related to an embodiment of the present invention and FIG. 13 is a diagram for describing a process in which a caregiver selects a group seat from sports stadium seats related to an embodiment of the present invention.

In FIG. 12 and FIG. 13, the same description as in FIG. 7 may be applied.

Therefore, the recommendation value calculation unit 235 calculates a recommendation value for each of all currently recommendable group seats which have been derived, and the group seat recommendation unit 240 recommends a predetermined number of group seats to the caregiver on the basis of recommendation ranking.

In this case, the caregiver may select one of the recommended group seats if he/she likes the recommended group seats.

The gap analysis unit 250 may analyze results as to whether the caregiver has selected a group seat from the predetermined number of recommended group seats.

As described above, the airplane seat recommendation method and apparatus according to an embodiment of the present invention can determine a group passenger type on the basis of PNR information and recommend a group seat suitable for the passenger type.

According to an embodiment of the present invention, it is possible to derive all group seats that can currently be recommended according to a group passenger type, calculate recommendation values for the derived group seats, and recommend group seats, thereby promoting the convenience of seat selection of customers.

According to one embodiment of the present invention, it is possible to recommend group seats in which customers' needs have been reflected by adjusting variable values used to calculate recommendation values through analysis of information on group seats recommended on the basis of recommendation values and information on a group seat selected by a caregiver.

The configurations and methods of the above-described embodiments are not limitedly applicable to the seat recommendation method and apparatus described above, and all or some embodiments may be selectively combined such that the embodiments can be modified in various manners.

## Claims

1. A seat recommendation method of a seat recommendation apparatus connected to a computer network, the seat recommendation method comprising:

   determining a group type on the basis of name record (NR) information of a representative, the NR information including information on the representative and companions;
   deriving all currently recommendable group seats using group seat pattern information and seat information;
   calculating a recommendation value corresponding to the group type for each of the derived group seats; and
   recommending a predetermined number of group seats to the representative on the basis of calculated result values.

2. The seat recommendation method of claim 1, wherein the group seat pattern information includes shape information of group seats, and the seat information includes information on a seat map of all seats and information on currently occupied seats.

3. The seat recommendation method of claim 2, wherein the calculating a recommendation value comprises calculating the calculation value using a position value and a pattern value for each of the derived group seats.

4. The seat recommendation method of claim 3, wherein the position value is calculated using a value according to a distance to an exit in a vertical direction of a corresponding seat, a value according to whether a horizontal position of the seat is a window, an aisle, or a middle seat, and a value according to a space per seat, and the pattern value is calculated using a value according to a degree of bonding between co-passengers and a value according to a degree of seat separation from other passengers.

5. The seat recommendation method of claim 3, wherein the calculating a recommendation value comprises calculating the recommendation value according to Equation 1 below.

   [Equation 1]

   $$V=[(D*WMA*LMR*S)*(B*US)]/P$$

   wherein V is a recommendation value, D is a variable representing a value according to a distance to an exit in a vertical direction of a corresponding seat, WMA is a variable representing a value according to whether a horizontal position of the seat is a window, an aisle, or a middle seat, LMR is a variable representing a value according to whether the horizontal position of the seat belongs to a right block, a middle block, or a left block, S is a variable representing a value according to a space per seat, B is a variable representing a value according to a degree of bonding between co-passengers, US is a variable representing a value according to a degree of seat separation from other passengers, and P is a variable representing a value according to a price per seat.

6. The seat recommendation method of claim 5, wherein the values D, WMA, LMR, S, B, and US are applied differently according to a group type.

7. A seat recommendation apparatus connected to a computer network, comprising:

   a group type determination unit configured to determine a group type on the basis of name record (NR) information of a representative, the NR information including information on the representative and companions;
   a group pattern database in which group seat pattern information is stored;
   a recommendable seat derivation unit configured to derive all currently recommendable group seats using the group seat pattern information and seat information;
   a recommendation value calculation unit configured to calculate a recommendation value for each of the derived group seats;

a group seat recommendation unit configured to recommend a predetermined number of group seats on the basis of calculated result values; and
a control unit configured to control a reception unit, the group type determination unit, the group pattern database, an air seat database, the recommendable seat derivation unit, the recommendation value calculation unit, and the group seat recommendation unit.

**8.** The seat recommendation apparatus of claim 7, wherein the group seat pattern information includes shape information of group seats, and the seat information includes information on a seat map of all seats and information on currently occupied seats.

**9.** The seat recommendation apparatus of claim 8, wherein the recommendation value calculation unit calculates the calculation value using a position value and a pattern value for each of the derived group seats.

**10.** The seat recommendation apparatus of claim 9, wherein the position value is calculated using a value according to a distance to an exit in a vertical direction of a corresponding seat, a value according to whether a horizontal position of the seat is a window, an aisle, or a middle seat, and a value according to a space per seat, and the pattern value is calculated using a value according to a degree of bonding between co-passengers and a value according to a degree of seat separation from other passengers.

**11.** The seat recommendation apparatus of claim 9, wherein the recommendation value calculation unit calculates the recommendation value according to Equation 1 below.

[Equation 1]

$$V=[(D*WMA*LMR*S)*(B*US)]/P$$

wherein V is a recommendation value, D is a variable representing a value according to a distance to an exit in a vertical direction of a corresponding seat, WMA is a variable representing a value according to whether a horizontal position of the seat is a window, an aisle, or a middle seat, LMR is a variable representing a value according to whether the horizontal position of the seat belongs to a right block, a middle block, or a left block, S is a variable representing a value according to a space per seat, B is a variable representing a value according to a degree of bonding between co-passengers, US is a variable representing a value according to a degree of seat separation from other passengers, and P is a variable representing a value according to a price per seat.

**12.** The seat recommendation apparatus of claim 11, wherein the recommendation value calculation unit calculates the recommendation value by differently applying the values D, WMA, LMR, S, B, and US according to a group type.

**13.** A seat recommendation method of a seat recommendation apparatus connected to a computer network, the seat recommendation method comprising:

deriving all currently recommendable group seats corresponding to a group type based on NR information of a representative, the NR information including information on the representative and companions;
calculating a recommendation value for each of the derived group seats using a position value and a pattern value for each of the derived group seats;
recommending a predetermined number of group seats on the basis of calculated result values;
receiving information on a group seat selected by the representative;
comparing the information on the group seat selected by the representative with information on the recommended group seats; and
adjusting at least one of the position value and the pattern value on the basis of comparison results.

**14.** The seat recommendation method of claim 13, wherein the adjusting at least one of the position value and the pattern value is performed such that a difference between the calculated recommendation value and a purchase probability based on actually result of purchasing a group seat of the plural representatives is reduced.

**15.** The seat recommendation method of claim 14, wherein the position value is calculated using a value according to a distance to an exit in a vertical direction of a corresponding seat, a value according to whether a horizontal position of the seat is a window, an aisle, or a middle seat, and a value according to a space per seat, and the pattern value is calculated using a value according to a degree of bonding between co-passengers and a value according to a degree of seat separation from other passengers.

**16.** The seat recommendation method of claim 15, wherein the calculating a recommendation value comprises calculating the recommendation value according to Equation 1 below, and the adjusting at least one of the position value and the pattern value comprises adjusting at least one of variable values used to calculate a recommendation value in Equation 1.

[Equation 1]

$$V=[(D*WMA*LMR*S)*(B*US)]/P$$

wherein V is a recommendation value, D is a variable representing a value according to a distance to an exit in a vertical direction of a corresponding seat, WMA is a variable representing a value according to whether a horizontal position of the seat is a window, an aisle, or a middle seat, LMR is a variable representing a value according to whether the horizontal position of the seat belongs to a right block, a middle block, or a left block, S is a variable representing a value according to a space per seat, B is a variable representing a value according to a degree of bonding between co-passengers, US is a variable representing a value according to a degree of seat separation from other passengers, and P is a variable representing a value according to a price per seat.

**17.** The seat recommendation method of claim 14, wherein the calculated recommendation value and a purchase probability based on actually result of purchasing a group seat of the plural representatives are applied differently according to a group type.

**18.** A seat recommendation apparatus connected to a computer network, comprising:

a recommendable seat derivation unit configured to derive all currently recommendable group seats corresponding to a group type based on NR information of a representative, the NR information including information on the representative and companions;
a recommendation value calculation unit configured to calculate a recommendation value for each of the derived group seats using a position value and a pattern value for each of the derived group seats;
a group seat recommendation unit configured to recommend a predetermined number of group seats on the basis of calculated result values;
a reception unit configured to receive information on a group seat selected by the representative;
a gap analysis unit configured to compare the information on the group seat selected by the representative with information on the recommended group seats and to adjust at least one of the position value and the pattern value on the basis of comparison results; and
a control unit configured to control the recommendable seat derivation unit, the recommendation value calculation unit, the reception unit, and the gap analysis unit.

**19.** The seat recommendation apparatus of claim 18, wherein the gap analysis unit adjusts at least one of the position value and the pattern value such that a difference between the calculated recommendation value and a purchase probability based on actually result of purchasing a group seat of the plural representatives is reduced.

**20.** The seat recommendation apparatus of claim 19, wherein the position value is calculated using a value according to a distance to an exit in a vertical direction of a corresponding seat, a value according to whether a horizontal position of the seat is a window, an aisle, or a middle seat, and a value according to a space per seat, and the pattern value is calculated using a value according to a degree of bonding between co-passengers and a value according to a degree of seat separation from other passengers.

**21.** The seat recommendation apparatus of claim 20, wherein the recommendation value calculation unit calculates the recommendation value according to Equation 1 below, and the gap analysis unit adjusts at least one of variable values used to calculate a recommendation value in Equation 1.

[Equation 1]

$$V=[(D*WMA*LMR*S)*(B*US)]/P$$

wherein V is a recommendation value, D is a variable representing a value according to a distance to an exit in a vertical direction of a corresponding seat, WMA is a variable representing a value according to whether a horizontal position of the seat is a window, an aisle, or a middle seat, LMR is a variable representing a value according to whether the horizontal position of the seat belongs to a right block, a middle block, or a left block, S is a variable representing a value according to a space per seat, B is a variable representing a value according to a degree of bonding between co-passengers, US is a variable representing a value according to a degree of seat separation from other passengers, and P is a variable representing a value according to a price per seat.

**22.** The seat recommendation apparatus of claim 19, wherein the calculated recommendation value and a purchase probability based on actually result of purchasing a group seat of the plural representatives are applied differently according to a group type.

FIG. 1

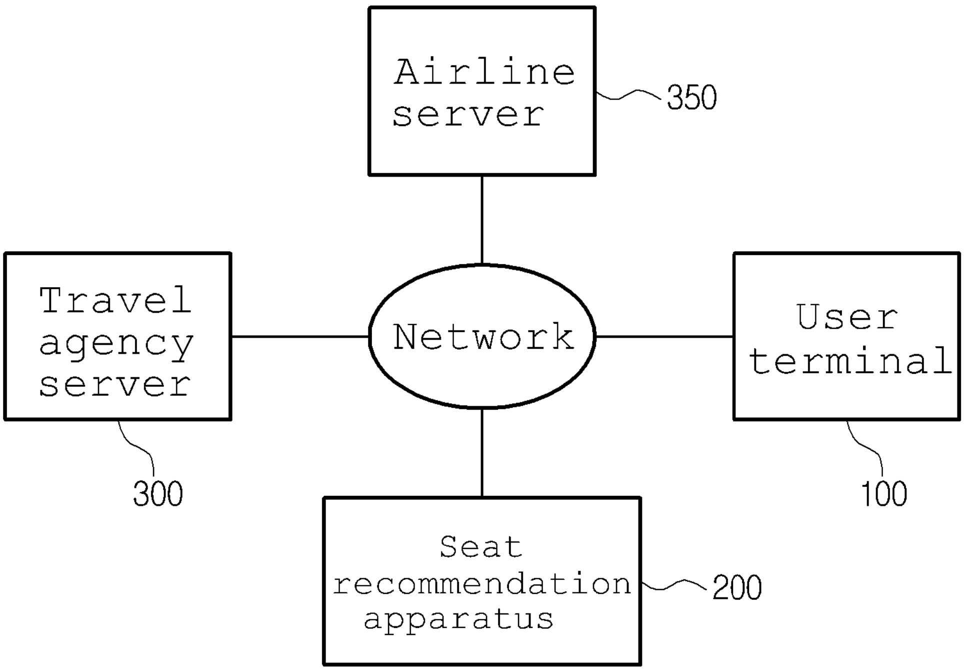
Airline server
350
Travel agency server
Network
User terminal
300
100
Seat recommendation apparatus
200

FIG. 2

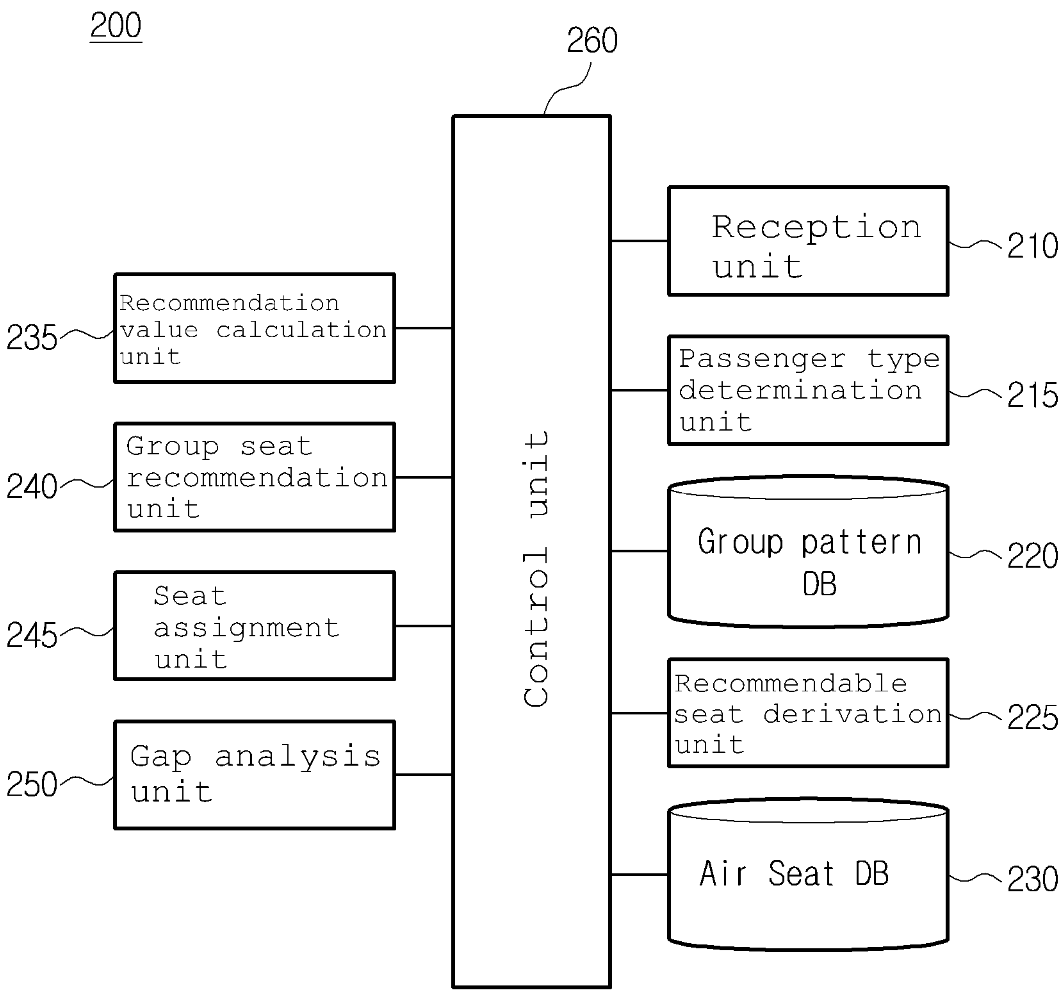
200
260
Control unit
Reception unit
210
Passenger type determination unit
215
Group pattern DB
220
Recommendable seat derivation unit
225
Air Seat DB
230
Recommendation value calculation unit
235
Group seat recommendation unit
240
Seat assignment unit
245
Gap analysis unit
250

FIG. 3

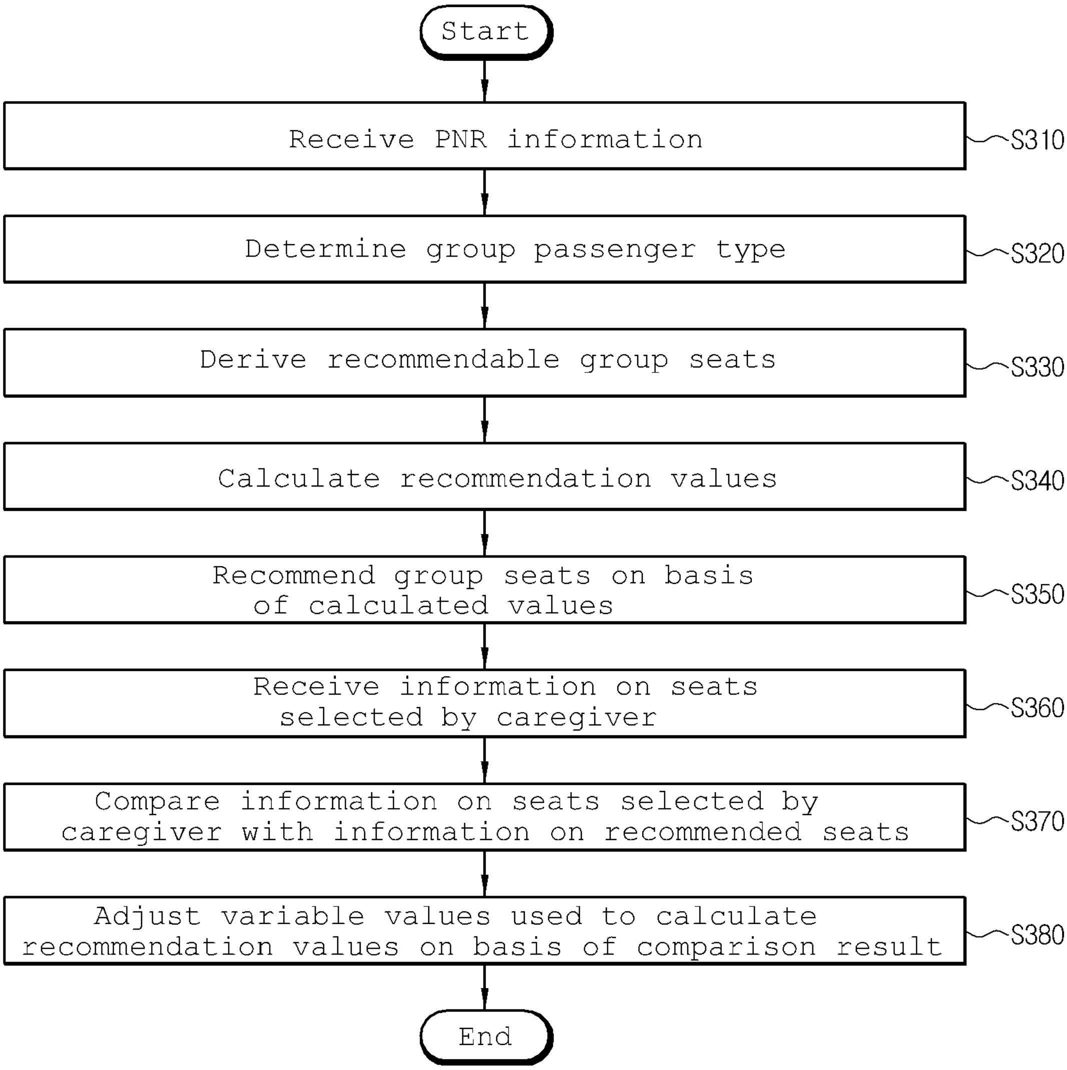
Start
Receive PNR information
S310
Determine group passenger type
S320
Derive recommendable group seats
S330
Calculate recommendation values
S340
Recommend group seats on basis of calculated values
S350
Receive information on seats selected by caregiver
S360
Compare information on seats selected by caregiver with information on recommended seats
S370
Adjust variable values used to calculate recommendation values on basis of comparison result
S380
End

FIG. 4

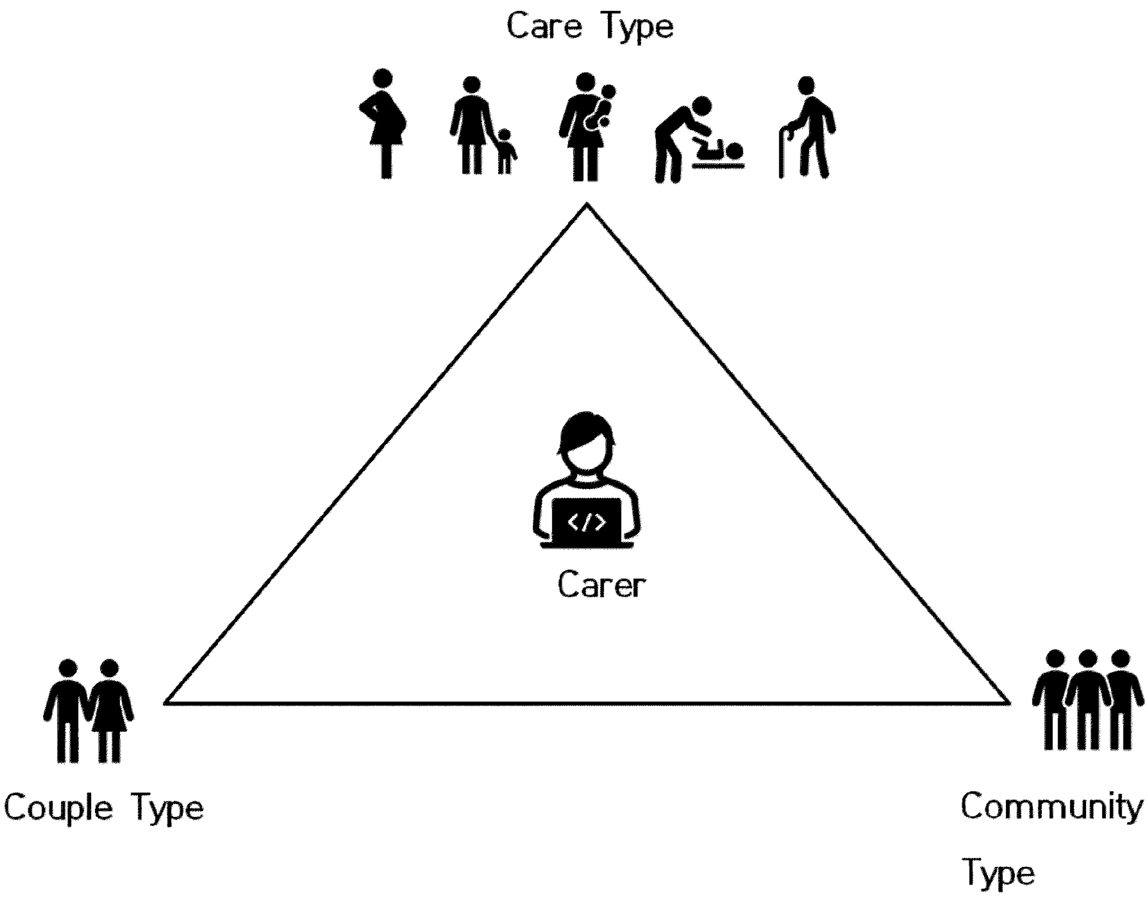

FIG. 5

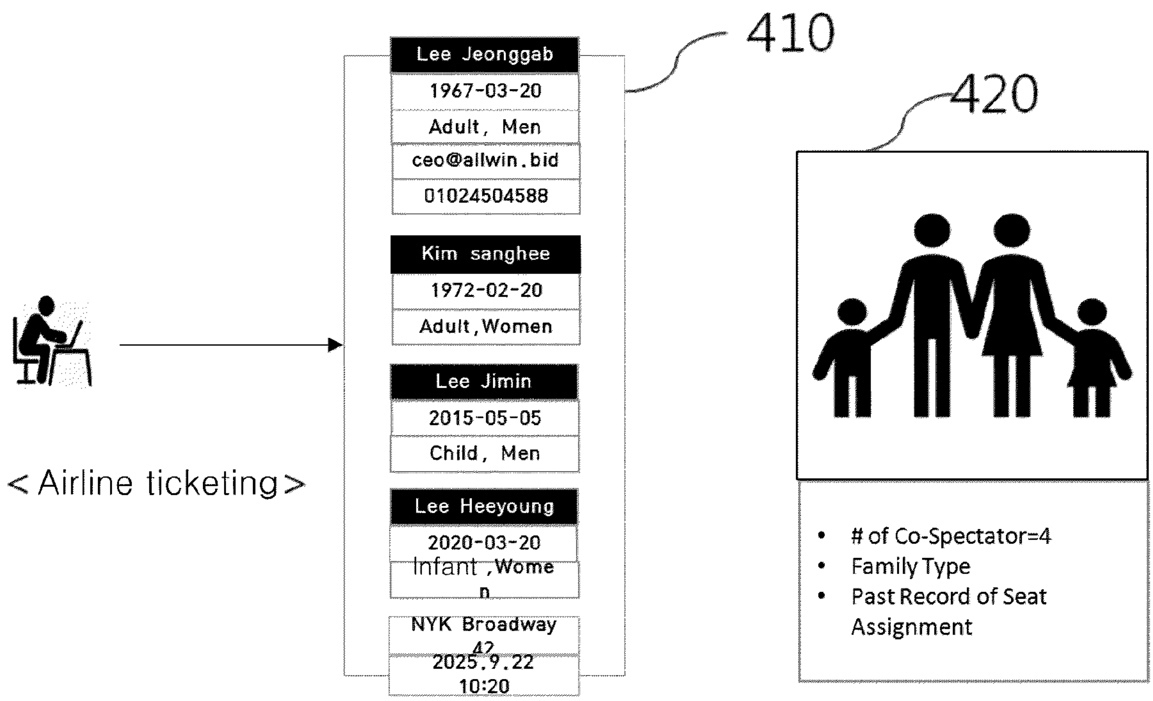
410
420
< Airline ticketing >
Lee Jeonggab
1967-03-20
Adult, Men
ceo@allwin.bid
01024504588
Kim sanghee
1972-02-20
Adult, Women
Lee Jimin
2015-05-05
Child, Men
Lee Heeyoung
2020-03-20
Infant, Wome n
NYK Broadway 42
2025.9.22 10:20
# of Co-Spectator=4
Family Type
Past Record of Seat Assignment

FIG. 6

| | | | Ranking for recommendable group seats (example) | | | | | |
|---|---|---|---|---|---|---|---|---|
| | | | 4-people I type (2A,2B,2C,2D) | | 4-people square type (2B,2C,3B,3C) | | 4-people L type (3D,3E,3F,4D) | |
| | | | SUM | EXIT<br>1A 1B 1C<br>2A 2B 2C 2D 2E 2F<br>3A 3B 3C 3D 3E 3F<br>4A 4B 4C hall 4D 4E 4F | SUM | EXIT<br>1A 1B 1C<br>2A 2B 2C 2D 2E 2F<br>3A 3B 3C 3D 3E 3F<br>4A 4B 4C hall 4D 4E 4F | SUM | EXIT<br>1A 1B 1C<br>2A 2B 2C 2D 2E 2F<br>3A 3B 3C 3D 3E 3F<br>4A 4B 4C hall 4D 4E 4F |
| 1.Pattern | 1.1.Bonding between co-passengers(Bonding) | Consecutive seats in same row =1<br>Seats having corridor therebetween in same row =0.5<br>Diagonal seats in front and back rows =0.1<br>Front and back seats =0 | 2.50 | 1.0 1.0 0.5 | 2.10 | 1.0<br>0.1 0.1<br>1.0 | 2.10 | 1.0 1.0<br>0.1 |
| | 1.2.Un-shared from other passengers (Un Sharing) | Number of group seats/total number of seats of corresponding block (including seats of other passengers) | 0.67 | 1 2 3 hall 4 5 6 | 0.67 | 5 3 1 hall<br>6 4 2 | 0.67 | hall 3 2 1<br>4 5 6 |
| 2.Position | 2.1.Distance to exit (Distance) | [EXIT<-->My seat] Distance | 3.01 | 0.75 0.75 0.75 0.75 | 2.64 | 0.75 0.75<br>0.57 0.57 | 2.82 | 0.75 0.75 0.75<br>0.57 |
| | | Premium value for foremost (rearmost) seat of same price | 2.91 | 0.73 0.73 0.73 0.73 | 2.56 | 0.73 0.73<br>0.56 0.56 | 1.94 | 0.56 0.56 0.56<br>0.27 |
| | 2.2.Space per seat (Space) | Space Per Seat | 5.32 | 1.00 1.00 1.00 2.32 | 4.00 | 1.00 1.00<br>1.00 1.00 | 4.00 | 1.00 1.00 1.00<br>1.00 |
| | 2.3.Window or Middle or Aisle | Window/middle /aisle seat | 1.22 | 0.41 0.37 0.22 0.22 | 1.17 | 0.37 0.22<br>0.37 0.22 | 1.22 | 0.22 0.37 0.41<br>0.22 |
| | 2.4.Left block or Right Block | Left Block(1A,1B,1C)<br>Right Block(1D,1E,1F) | 1.72 | 0.36 0.36 0.36 0.64 | 2.61 | 0.36 0.36<br>0.44 0.44 | 2.33 | 0.56 0.56 0.56<br>0.56 |
| 3.Price | 3.1.Reserved seat price(Price) | Reserved seat price by zone | ₤29.0 | ₤6.0 ₤6.0 ₤6.0 ₤11 | ₤24.0 | ₤6.0 ₤6.0<br>₤6.0 ₤6.0 | ₤24.0 | ₤6.0 ₤6.0 ₤6.0<br>₤6.0 |
| Total Value=(1*2)/3 | | | 5.61 | First rank | 3.12 | Third rank | 3.47 | Second rank |

FIG. 7

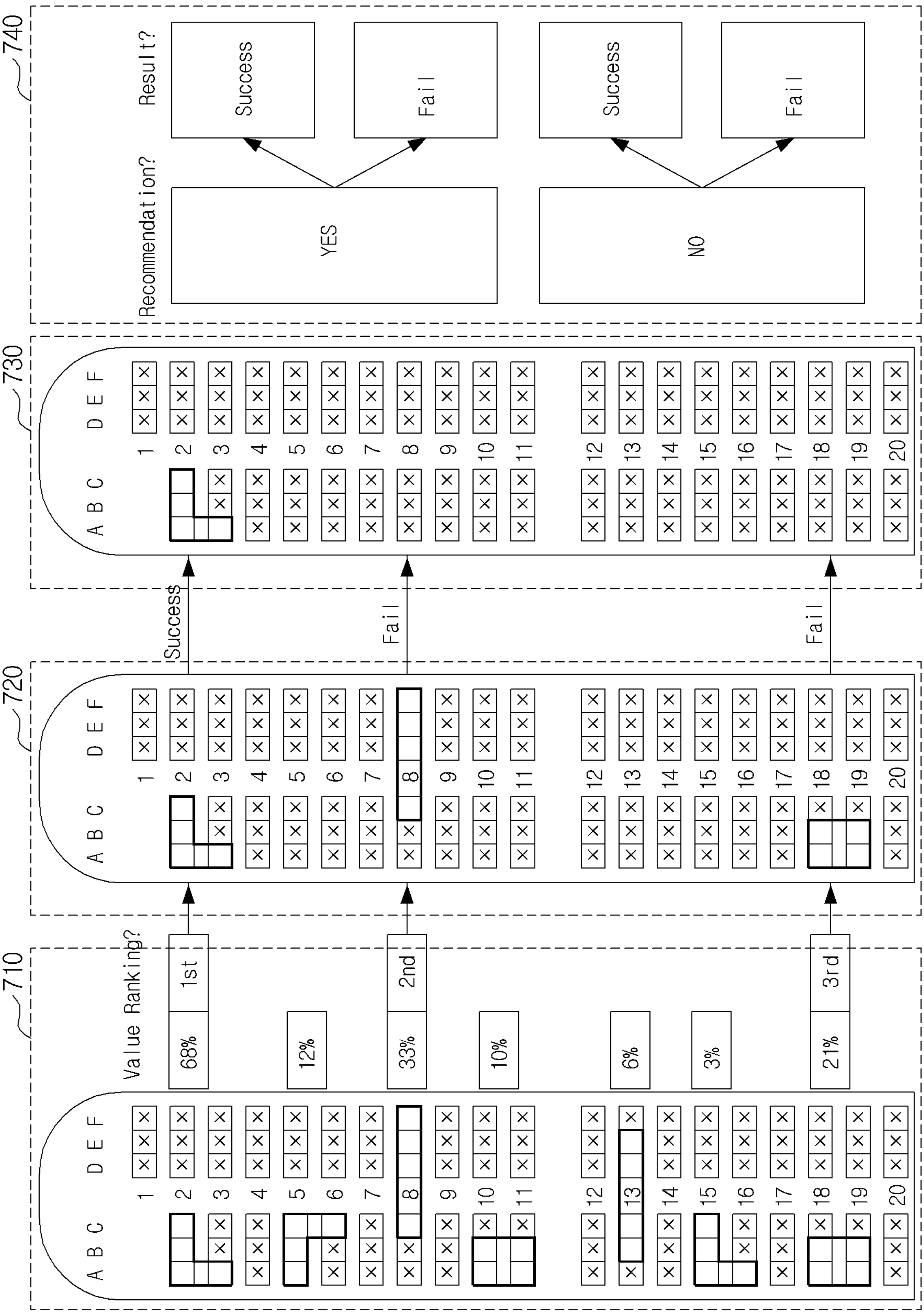
710
720
730
740
Value Ranking?
68%
1st
12%
33%
2nd
10%
6%
3%
21%
3rd
Success
Fail
Fail
Recommendation?
Result?
YES
NO
Success
Fail
Success
Fail
A B C
D E F

FIG. 8

| | 1A | 1B | 1C | 2A | 2B | 2C | 2D | 2E | 2F |
|---|---|---|---|---|---|---|---|---|---|
| Alpha air seat initial model data | 0.049 | 0.043 | 0.026 | 0.027 | 0.024 | 0.014 | 0.030 | 0.050 | 0.056 |
| Actual data | 0.047 | 0.044 | 0.028 | 0.029 | 0.025 | 0.022 | 0.034 | 0.048 | 0.052 |
| Gap | 3% | −1% | −8% | −6% | −3% | −36% | −13% | 3% | 7% |

...

FIG. 9

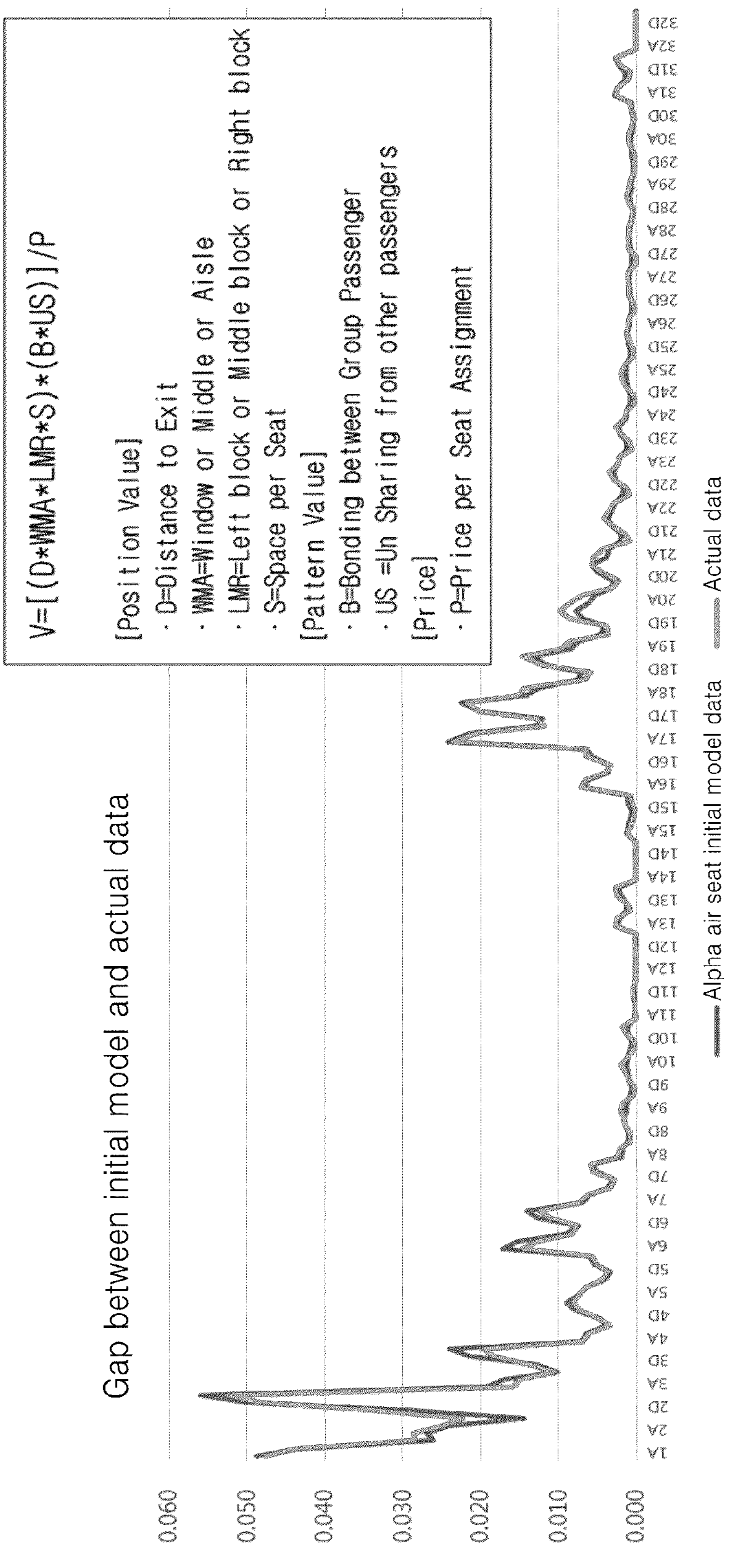
Gap between initial model and actual data
V=[(D*WMA*LMR*S)*(B*US)]/P
[Position Value]
· D=Distance to Exit
· WMA=Window or Middle or Aisle
· LMR=Left block or Middle block or Right block
· S=Space per Seat
[Pattern Value]
· B=Bonding between Group Passenger
· US =Un Sharing from other passengers
[Price]
· P=Price per Seat Assignment
0.060
0.050
0.040
0.030
0.020
0.010
0.000
1A 2A 2D 3A 3D 4A 4D 5A 5D 6A 6D 7A 7D 8A 8D 9A 9D 10A 10D 11A 11D 12A 12D 13A 13D 14A 14D 15A 15D 16A 16D 17A 17D 18A 18D 19A 19D 20A 20D 21A 21D 22A 22D 23A 23D 24A 24D 25A 25D 26A 26D 27A 27D 28A 28D 29A 29D 30A 30D 31A 31D 32A 32D
Alpha air seat initial model data
Actual data

FIG. 10

| Group Seat Value | | | 4 Spectator-I type | | 4 Spectator_Square Type | | 4 Spectator_L type | |
|---|---|---|---|---|---|---|---|---|
| | | | 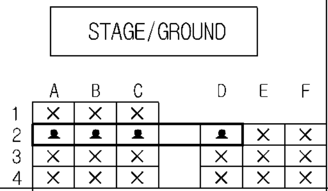 | | 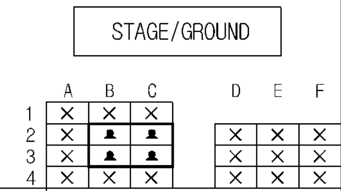 | | 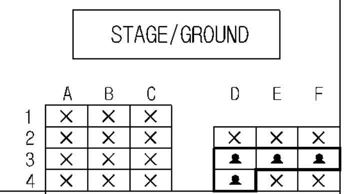 | |
| 1.Pattern | 1.1.B=Bonding between co-spectator | Consecutive seats in same row=1<br>seats having corridor therebetween in same row=0.5<br>Diagonal seats in front and back rows=0.1<br>Front and back seats=0 | 2.50 | 1.0 1.0 0.5 | 2.20 | 1.0<br>0.1 0.1<br>1.0 | 2.10 | 1.0 1.0<br>0.1 |
| | 1.2.US=(Un-shared from other spectators) | Number of group seats/total number of seats of corresponding block (including seats of other passengers) | 0.67 | 1 1 1 1 1 1 | 0.67 | 1 1 1 hall<br>1 1 1 | 0.67 | hall 1 1 1<br>1 1 1 |
| 2.Position | 2.1.D=(Distance To Satge) | Distance to stage | 3.20 | 0.80 0.80 0.80 0.80 | 2.80 | 0.80 0.80<br>0.60 0.60 | 2.30 | 0.60 0.60 0.60<br>0.50 |
| | 2.2.S=(Space Per Seat) | Space Per Seat | 1.60 | 0.30 0.30 0.30 0.70 | 1.20 | 0.30 0.30<br>0.30 0.30 | 1.20 | 0.30 0.30 0.30<br>0.30 |
| | 2.3.DMA=(Door or Middle or Aisle) | Door/middle/aisle seat | 1.22 | 0.41 0.37 0.22 0.22 | 1.17 | 0.37 0.22<br>0.37 0.22 | 1.22 | 0.22 0.37 0.41<br>0.22 |
| | 2.4.LMR=(Left block or Mid block or Right Block) | Left, Mid, Right | 1.72 | 0.36 0.36 0.36 0.64 | 1.61 | 0.36 0.36<br>0.44 0.44 | 2.33 | 0.56 0.56 0.56<br>0.56 |
| 3.Price | 3.1.P=(Group Seat Price) | Reserved seat price by zone | £400.0 | #### #### #### #### | £360 | #### ####<br>£80 £80 | £290 | £80 £80 £80<br>£50 |
| V=(B*US*D*S*MA*LMR)/P | | | 0.045 | First rank | 0.026 | Third rank | 0.036 | Second rank |

FIG. 11

| Classification | Co-Passenger Seat Pattern | | | | | | | | | | | |
|---|---|---|---|---|---|---|---|---|---|---|---|---|
| | I type | | | | L type | | | | Square type | | | |
| | Group Seat Patten | Bonding between co-passenger | Un-Sharing from others | V=B*US | Group Seat Patten | Bonding between co-passenger | Un-Sharing from others | V=B*US | Group Seat Patten | Bonding between co-passenger | Un-Sharing from others | V=B*US |
| 1 person | | - | 0.33 | 0.33 | | | | | | | | |
| 2 people | | 1.00 | 0.67 | 0.67 | | | | | | | | |
| 3 people | | 2.00 | 1.00 | 2.00 | | 1.10 | 0.50 | 0.55 | | | | |
| 4 people | | 2.50 | 0.67 | 1.67 | | 2.10 | 0.67 | 1.40 | | 2.20 | 0.67 | 1.47 |
| | | 2.50 | 0.67 | 1.67 | | | | | | | | |
| 5 people | | 3.50 | 0.83 | 2.92 | | 3.30 | 0.83 | 2.75 | | | | |
| 6 people | | 4.50 | 1.00 | 4.50 | | | | | | 4.40 | 1.00 | 4.40 |
| 7 people | | | | | | 4.60 | 0.78 | 3.58 | | | | |
| | | | | | | 4.50 | 0.78 | 3.50 | | | | |
| 8 people | | | | | | 5.80 | 0.89 | 5.16 | | | | |
| | | | | | | 5.70 | 0.89 | 5.07 | | | | |
| 9 people | | | | | | 7.00 | 1.00 | 7.00 | | 6.80 | 1.00 | 6.80 |

FIG. 12

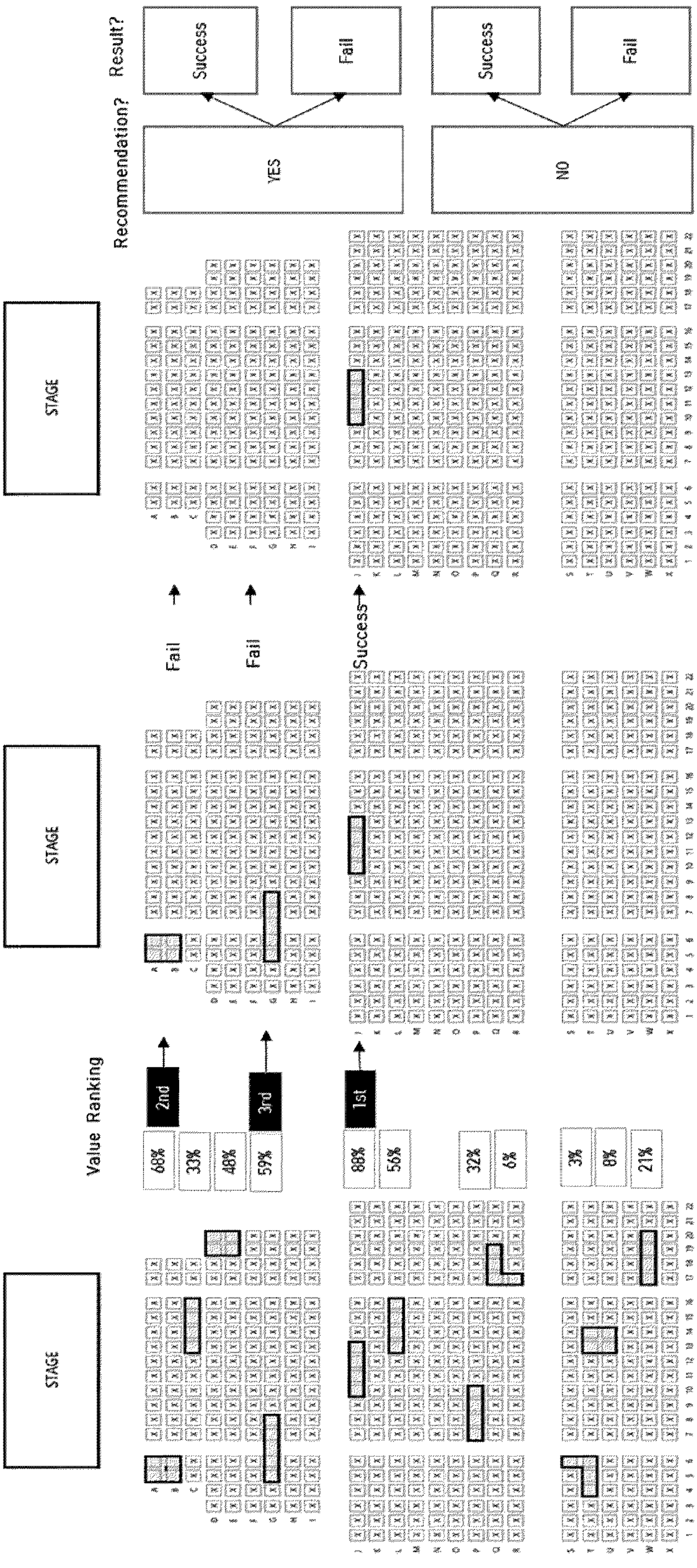
STAGE
Value Ranking
68%
33%
48%
59%
88%
56%
32%
6%
3%
8%
21%
2nd
3rd
1st
STAGE
Fail
Fail
Success
STAGE
Recommendation?
Result?
YES
NO
Success
Fail
Success
Fail

FIG. 13

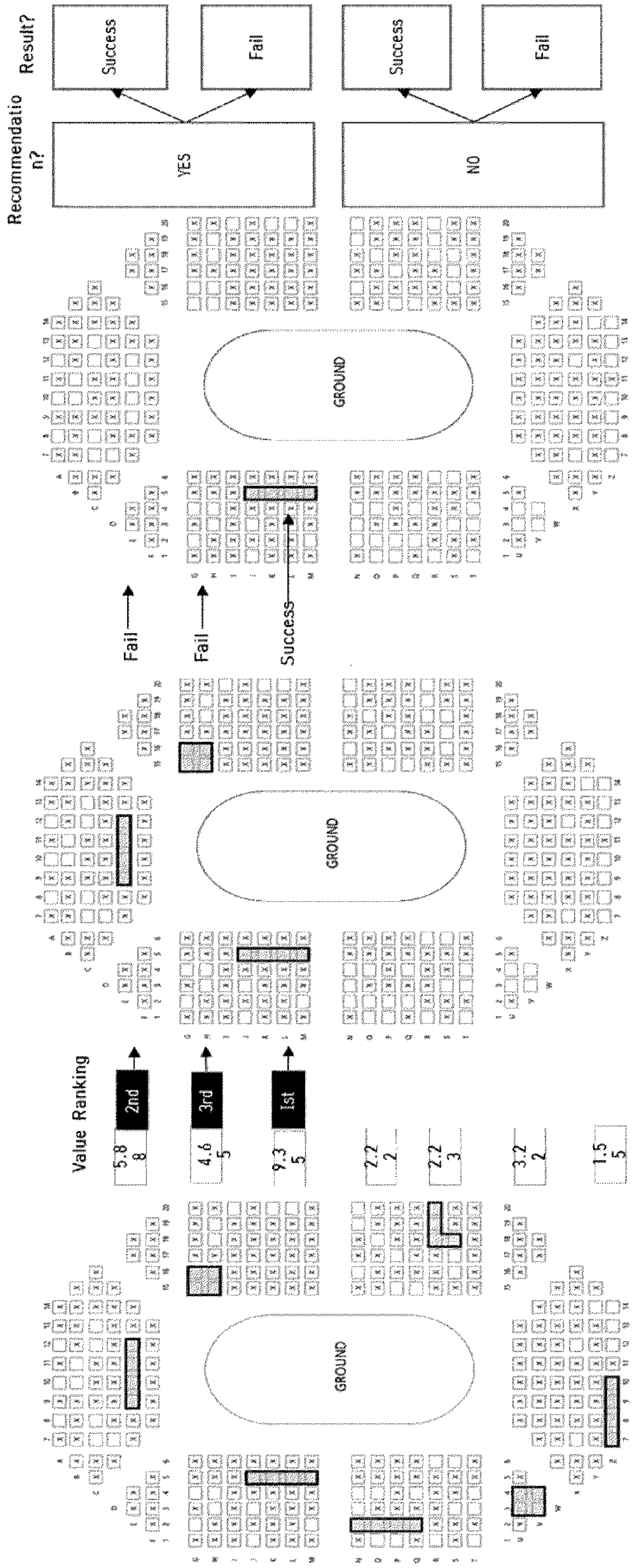
Recommendation?
Result?
YES
NO
Success
Fail
Success
Fail
Fail
Fail
Success
Value Ranking
5.88
4.65
9.35
2.22
2.23
3.22
1.55
2nd
3rd
1st
GROUND
GROUND
GROUND

**INTERNATIONAL SEARCH REPORT**

International application No. **PCT/KR2021/018523**

**A. CLASSIFICATION OF SUBJECT MATTER**

**G06Q 50/30**(2012.01)i; **G06Q 10/02**(2012.01)i; **G06Q 30/06**(2012.01)i

According to International Patent Classification (IPC) or to both national classification and IPC

**B. FIELDS SEARCHED**

Minimum documentation searched (classification system followed by classification symbols)

G06Q 50/30(2012.01); G06Q 10/02(2012.01); G06Q 10/06(2012.01); G06Q 50/10(2012.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 그룹(group), 유형(type), 좌석(seat), 패턴(pattern), 정보(information), 계산(calculation)

**C. DOCUMENTS CONSIDERED TO BE RELEVANT**

| Category* | Citation of document, with indication, where appropriate, of the relevant passages | Relevant to claim No. |
|---|---|---|
| Y | JP 2018-504696 A (ALIBABA GROUP HOLDING LIMITED) 15 February 2018 (2018-02-15) See paragraphs [0031], [0037], [0056] and [0069]; claim 1; and figures 1-9. | 1-4,7-10,13-15,17-20,22 |
| A | | 5-6,11-12,16,21 |
| Y | KR 10-2005-0016653 A (AMADEUS S.A.S.) 21 February 2005 (2005-02-21) See pages 3-5; and claim 1. | 1-4,7-10,13-15,17-20,22 |
| A | KR 10-1071696 B1 (DONGGUK UNIVERSITY INDUSTRY-ACADEMIC COOPERATION FOUNDATION) 11 October 2011 (2011-10-11) See claim 1; and figures 1-13. | 1-22 |
| A | JP 2012-177974 A (OSAKA GAS CO., LTD.) 13 September 2012 (2012-09-13) See claim 1; and figures 1-8. | 1-22 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **04 March 2022** | **04 March 2022** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

INTERNATIONAL SEARCH REPORT

International application No.
**PCT/KR2021/018523**

**C. DOCUMENTS CONSIDERED TO BE RELEVANT**

| Category* | Citation of document, with indication, where appropriate, of the relevant passages | Relevant to claim No. |
|---|---|---|
| A | JP 2020-204923 A (KYOCERA DOCUMENT SOLUTIONS INC.) 24 December 2020 (2020-12-24) See claim 1; and figures 1-16. | 1-22 |

Form PCT/ISA/210 (second sheet) (July 2019)

**INTERNATIONAL SEARCH REPORT**
**Information on patent family members**

International application No.
**PCT/KR2021/018523**

| Patent document cited in search report | Publication date (day/month/year) | Patent family member(s) | Publication date (day/month/year) |
|---|---|---|---|
| JP 2018-504696 A | 15 February 2018 | CN 105787574 A | 20 July 2016 |
| | | TW 201624358 A | 01 July 2016 |
| | | TW I671691 B | 11 September 2019 |
| | | US 2016-0189064 A1 | 30 June 2016 |
| | | WO 2016-106073 A1 | 30 June 2016 |
| KR 10-2005-0016653 A | 21 February 2005 | AU 2003-255702 A1 | 09 February 2004 |
| | | AU 2003-255702 B2 | 05 June 2008 |
| | | CA 2488381 A1 | 29 January 2004 |
| | | EP 1532564 A1 | 25 May 2005 |
| | | FR 2842003 A1 | 09 January 2004 |
| | | JP 2005-532641 A | 27 October 2005 |
| | | US 2006-0229920 A1 | 12 October 2006 |
| | | WO 2004-010349 A2 | 29 January 2004 |
| KR 10-1071696 B1 | 11 October 2011 | None | |
| JP 2012-177974 A | 13 September 2012 | None | |
| JP 2020-204923 A | 24 December 2020 | None | |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 2021018523 W
- KR 1020210035677